# EUROPÄISCHE PATENTSCHRIFT

(11) **EP 3 387 889 B1**
(45) Veröffentlichungstag und Bekanntmachung des Hinweises auf die Patenterteilung: **26.02.2020**
(21) Anmeldenummer: 18163339.7
(22) Anmeldetag: 22.03.2018
(51) Int. Cl.: A01B 1/02, B25G 1/10

(54) **SPATEN**
SPADE
BÊCHE

(30) Priorität: 07.04.2017 DE 202017102080 U
(43) Veröffentlichungstag der Anmeldung: 17.10.2018
(73) Patentinhaber: Idealspaten Bredt GmbH & Co. KG, 58313 Herdecke (DE)
(72) Erfinder: Brosch, Eckhard, 45699 Herten (DE)
(74) Vertreter: Bockhorni & Brüntjen Partnerschaft Patentanwälte mbB

(56) Entgegenhaltungen:
- GB-A- 819 910
- GB-A- 859 313
- GB-A- 997 676
- US-A- 4 247 141
- US-A- 5 669 649
- US-A1- 2017 014 986
- US-A1- 2017 057 074

## Beschreibung

Die Erfindung betrifft einen Spaten gemäß dem Oberbegriff des Anspruches 1. Ein solcher Spaten ist in US5669649A offenbart.

Derartige Spaten weisen üblicherweise einen Stiel aus Holz, ein am oberen Ende vorgesehenes quer verlaufendes Griffteil (üblicherweise in T-Form mit dem Stiel) und ein am unteren Stielende befestigtes Spatenblatt auf, welches aus Metall gebildet ist.

Derartige Spaten werden vornehmlich für Gartenarbeiten, aber auch im Bau und dergleichen Tätigkeiten verwendet. Kritisch wird die Anwendung derartiger Spaten bei vergleichsweise festen Böden, insbesondere Böden, die stark mit Wurzelwerk versetzt sind, so dass Probleme insbesondere bei Rodungsarbeiten und dergleichen auftreten, wobei häufig der Stiel bei Hebelarbeiten brechen und das Spatenblatt bzw. der Anbindungsbereich Spatenblatt mit dem Stiel verformt werden kann, so dass der Spaten nicht mehr geeignet zur Arbeit genutzt werden kann.

Aufgabe der Erfindung ist es, einen Spaten auch für Schwerarbeiten zu schaffen, der frei von den oben angegebenen Nachteilen ist, insbesondere in Böden mit festem Wurzelwerk gut einsetzbar ist, ein Hebeln auch unter schwersten Bedingungen ohne Weiteres ermöglicht und auch eine komfortable Führung des Spatenwerkzeugs während des Gebrauchs gewährleistet. Diese Aufgabe wird erfindungsgemäß durch die im Kennzeichenteil des Anspruches 1 enthaltenen Merkmale gelöst.

Zweckmäßige Weiterbildungen der Erfindung sind durch die in den Unteransprüchen enthaltenen Merkmale gekennzeichnet.

Nach Maßgabe der Erfindung ist der Spatenstiel insgesamt aus einem durchgehenden metallischen Rohr gebildet und zwar vorzugsweise aus einem Stahlrohr, so dass sich der Spaten insgesamt auch für schwere Hebelarbeiten eignet ohne dass die Gefahr eines Bruchs auftreten kann.

In vorteilhafter Weise ist das am oberen Stielende vorgesehene Griffstück kugelförmig und zwar insbesondere als Kugel ausgebildet, die aus Hartholz hergestellt ist.

Dadurch ergibt sich eine sehr gute flexible Führung des Spatenwerkzeuges, was sowohl ein Drehen wie auch ein Schwenken beim Hebeln mit dem Spaten in einfacher Weise ermöglicht, ohne dass der Griff entsprechend umgesetzt werden muss. Dadurch eignet sich der Spaten in Verbindung mit einem metallischen Spatenstiel sehr gut für schwere Bodenarbeiten, insbesondere für Rodungsarbeiten mit stark verzweigtem Wurzelwerk im Boden.

In weiterer vorteilhafter Ausbildung ist das Griffstück als runder Knauf mit einem bolzenartigen Steckteil versehen, so dass der Griff in einfacher Weise im Rohr des Stiels befestigt werden kann. Hierzu eignet sich eine zusätzliche Schraubverbindung entweder durch eine Schraube oder zwei mit Abstand angeordnete Schrauben. Hierbei ist das bolzenartige Steckteil am Knauf zweckmäßigerweise an die Innenkontur des Stielrohres angepasst, so dass das Steckteil fest mit Passung eingesetzt werden kann.

Zweckmäßigerweise ist das Stielrohr aus einem hochlegierten Stahl gebildet. Eine Vickers-Härte größer 700 HV, vorzugsweise größer gleich 900 HV ist zweckmäßig. Dadurch ist der Stiel sozusagen bruchfest und es können auch große Lasten gehebelt werden. Der Stiel kann bezüglich des Spatenblatts zweckmäßig leicht nach oben gewinkelt sein und mit der Spatenunterseite einen Winkel von 5° bis 10°, vorzugsweise 6° bis 7° einschließen. Durch die leichte Abkröpfung lassen sich bei einem Stiel mit einer Stiellänge ab der oberen Stirnkante des Spatenblatts von etwa 80 bis 100 cm bis zum Knopf enorme Lasten bis zu 2 Tonnen hebeln. Die Ausbildung des Knaufs als kugelförmiger Knauf, insbesondere als Kugel, die aus Hartholz ausgebildet ist, erleichtert eine flexible Werkzeugführung des Spatens auch unter schweren Einsatzbedingungen.

Zweckmäßig ist eine Wanddicke des Stielrohrs von 2 bis 3,7 Millimeter, insbesondere 3,2 bis 3,6 Millimeter. Vorzugsweise beträgt die Wanddicke 3,5 Millimeter. Zweckmäßigerweise ist das Stielrohr mit kreisringförmigem Querschnitt ausgebildet, was aber nicht zwingend ist, auch jede andere geeignete, etwa ovale, Querschnittsform ist durchaus in Betracht zu ziehen. Dadurch ist der Stiel hochstabil, aber ist gegenüber einem Holzstiel "flexibel". Dadurch ist er ergonomisch günstig für den Arbeiter und auch bei starken Rodungsarbeiten schonend für Hand und Arm.

Erfindungsgemäss ist das Spatenblatt mit einer Dicke im Bereich von 4 bis 6 Millimeter, insbesondere 4,5 bis 5,5 Millimeter und zwar vorzugsweise 5 Millimeter praktisch undeformierbar ausgebildet. Dadurch kann auch stärkstes Wurzelwerk durchstochen werden. Durch die ausgeprägte Dicke des Spatenblatts gegenüber herkömmlichen Spaten und durch den Metallstiel erhöht sich auch signifikant das Gewicht des Spatens im Vergleich zu herkömmlichen Spaten, sodass der Spaten mit einer entsprechend hohen Wucht in das Erdreich gerammt werden kann, was das Durchstechen auch dickerer Wurzeln leicht und effizient macht.

Eine spitz zugeschärfte Schneide am unteren Ende des Spatenblatts insbesondere über eine Tiefe von circa 1 Zentimeter ist zweckmäßig, so dass Wurzelwerk leicht durchtrennt werden kann.

Vorzugsweise ist das Spatenblatt mit dem unteren Rohrende des Stiels verschweißt, wobei eine passgerechte Konturierung einer Befestigungszunge am Spatenblatt mit dem Stielrohr vorteilhaft ist. Insbesondere kann hierzu der untere Bereich, das heißt der Befestigungsbereich des Stielrohrs mit dem Spatenblatt bzw. der Befestigungszunge entsprechend gestaucht bzw. deformiert werden. Hier eignet sich für die Befestigungszunge und das gestauchte Stielende vorzugsweise ein V-förmiger Querschnitt. Zweckmäßig ist die Zunge 15 bis 23 cm, insbesondere etwa 20 cm lang, so dass sich eine entsprechend große Überlappung von Zunge und Stiel ergibt. Dadurch ergibt sich eine sehr gute konturangepasste Anlage von Stiel an der Befestigungszunge des Spatenblatts und damit ein gutes Verschweißen zwischen Stiel und Spatenblatt. Vorteilhaft ist eine Verschweißung Stiel mit Spatenblatt an beiden Längsrändern der Zunge. In einer zweckmäßigen Ausführungsform beträgt die Länge der Befestigungszunge zwischen 16 und 22 cm, insbesondere etwa 20 cm. Vorzugsweise ist der Querschnitt der Befestigungszunge V-förmig. Hierbei ist es zweckmäßig, dass auch das untere Stielende entsprechend V-förmig komplementär gestaucht wird, so dass eine Ineinanderpassung von Befestigungszunge und gestauchtem Stielende zum Zwecke einer einwandfreien Anlage beider Elemente und zum Verschweißen gewährleistet ist. Das Gesamtgewicht des Spatens beträgt etwa 4,5 bis 5,5 kg, was gut für Durchstechen schwerer Wurzelwerkes ist.

Insbesondere ergibt sich ein starker synergistischer Effekt durch den Dreiklang des Zusammenwirkens von rundem Knauf am oberen Stielende des Spatens, dem Stielrohr aus Stahl und der ausgeprägten spitz zugeschärften Schneide im Bereich von etwa 1 cm, was schwere Rodungsarbeiten in ergonomischer Weise zulässt. Es kann auch starkes Wurzelwerk durchstochen werden und dann, wenn es aufgrund einer oder mehrerer verdickter Wurzeln zu einem Stopp der Spatenschneidetätigkeit kommt, ergibt sich in Folge der dem Stielrohr aus Stahl innewohnenden gewissen Flexibilität ein gewisser Federungseffekt, sodass Hand und Arm nicht übermäßig stoßartig belastet werden. Hinzu kommt, dass der runde Knauf in diesem Zusammenhang auch ein Drehmoment in der Hand initiiert, etwa wenn aufgrund eines sehr harten Widerstands beim Einstechen des Spatens eine Drehbewegung auf das Spatenblatt, etwa beim Treffen der Spitze auf einen Stein, initiiert wird. Durch dieses Zusammenwirken ergibt sich somit ein ergonomisches Arbeiten für den Benutzer des Spatens, welches Rücken, Arm und Hand auch bei schwerster Bearbeitung entsprechend schont. Dieser Effekt ergibt sich durch das Zusammenwirken dieser Maßnahmen in einer sehr vorteilhaften Weise bei Bedienung und Handhabung des Spatens.

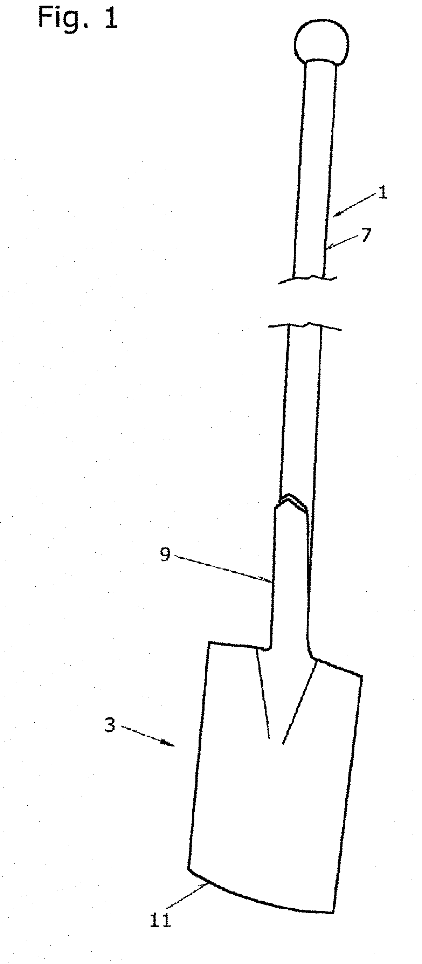

Nachfolgend wird ein bevorzugtes Ausführungsbeispiel der Erfindung anhand der Zeichnung beschrieben. Darin zeigen
- Figur 1: eine perspektivische Darstellung eines erfindungsgemäßen Spatens

Figur 1 zeigt einen Spaten mit einem metallischen Stiel 1, einem am unteren Ende des Stiels befestigten Spatenblatt 3 und einem am oberen Ende angeordneten Griffstück 5, welches kugelförmig und hier als Kugel 5 ausgebildet ist.

Der Stiel 1 ist aus Metall gebildet und zwar im bevorzugten Ausführungsbeispiel als Stahlrohr 7, wobei zweckmäßigerweise ein hochlegierter Stahl, insbesondere ein solcher mit einer hohen Vickers-Härte gewählt wird.

Das Stielrohr 7 aus Stahl hat im dargestellten Ausführungsbeispiel einen kreiszylindrischen Querschnitt mit einer Wanddicke von 3,5 Millimeter, wodurch sich der Spaten insbesondere sehr gut für Arbeiten an Wurzelwerk im Boden und damit erforderliche Hebelarbeiten eignet.

Das Stielrohr 7 hat über die gesamte Länge bis auf das untere vorzugsweise an die Kontur einer vom oberen Stirnrand des Spatenblatts vorstehenden Befestigungszunge entsprechend angestauchtes Befestigungsende mit dem Spatenblatt 3 einen gleichmäßigen Querschnitt.

Das Spatenblatt 3 weist im dargestellten Ausführungsbeispiel eine Dicke von fünf Millimetern auf und ist vorzugsweise aus gehärtetem Vergütungsstahl und damit praktisch nicht bleibend deformierbar hergestellt. Auch das Spatenblatt eignet sich damit für Schwerarbeiten in mit entsprechendem Wurzelwerk versetzten Böden. Unter Schwerlast kann der Stiel aufgrund einer gewissen Flexibilität leicht biegen, kehrt nach Lastwegnahme aber wieder in seine gerade Ausgangslage zurück.

Anders als übliche Schaufel- oder Spatenblätter weist das Spatenblatt 3 mittig im oberen Bereich nicht eine übliche Tülle mit einem vorderen und hinteren Befestigungselement auf, vielmehr lediglich eine sich nach oben erstreckende Befestigungszunge 9, deren Innenkontur an das untere entsprechend gestauchte Ende des Stiels angepasst ist. Hierbei ist der Befestigungsbereich am unteren Ende des Stielrohrs 7 gestaucht und zwar in Anpassung an die Kontur der Befestigungszunge 9, so dass eine innige Verschweißung zwischen Rohr 7 und dem Spatenblatt 3 möglich ist. Dadurch ergibt sich ein sozusagen unkaputtbarer Verbund zwischen Stiel und Spatenblatt 3.

Wie Figur 1 zeigt, ist die untere Schneide 11 des Spatenblatts 3 spitz zugeschärft und zwar über einen Bereich von vorzugsweise 9 bis 12 mm, insbesondere circa einem Zentimeter. Das heißt, das Spatenblatt ist mit einer scharf angeschnittenen Schneide versehen, was den Spaten wiederum für den Einsatz unter festen, insbesondere mit Wurzelwerk untersetzten Bodenverhältnissen in besonderer Weise tauglich macht.

Hinzu kommt, dass das obere Griffstück 5 vorzugsweise in Form einer Kugel 12 nicht wie üblicherweise durch einen senkrecht zum Stiel verlaufenden und beidseitig vorstehenden Griffbügel gebildet ist, wie es üblicher Stand der Technik bei einem Spaten wäre, vielmehr sozusagen punktuell und als Kugel leicht in der Hand während der Arbeit mit dem Spaten gedreht und geschwenkt werden kann. Dies unterstützt das Arbeiten mit dem Spaten für schweres Wurzelwerk im Boden.

Aus der Figur 1 nicht ersichtlich ist ein an der Kugel 12, die aus Hartholz zweckmäßigerweise geformt ist, sich einseitig erstreckendes Ansatzstück in Form eines zylindrischen Bolzens 14, über den die Kugel 5 am oberen Ende des Stiels befestigbar ist. Hierzu wird der Zylinderbolzen unterhalb der Kugel 5 in das Stahlrohr passgerecht eingesetzt, wobei zusätzlich eine Schraubverbindung zweckmäßig ist insbesondere kann sich die Schraube durch den gesamten Stiel erstrecken und wird rückseitig mit einer Mutter entsprechend gesichert. Dadurch ist der Knauf 5 unverlierbar auf dem Stiel gehalten. Der Bolzen ist gestrichelt dargestellt.

Ebenso aus der Figur nicht oder allenfalls leicht ersichtlich, ist der Stiel gegenüber dem Spatenblatt leicht nach vorne gekippt, also unter einem Winkel zum Spatenblatt angeordnet. Der Winkel liegt vorzugsweise im Bereich von 5° bis 10°, insbesondere 6° bis 7° und im Ausführungsbeispiel 6°, wodurch das Hebeln erleichtert wird. Dadurch lassen sich auch sehr starke Wurzeln im Erdreich leicht lockern und auch Steine mit einem Gewicht bis zu etwa 2,1 Tonnen leicht anhebeln.

Insgesamt ergibt sich ein extrem robustes Spatenwerkzeug mit gleichwohl kompakter Bauweise für vielfältigste Einsatzzwecke, insbesondere Schwerarbeiten im Bau- und Gartenbereich. Der Griff 5 sorgt als haptisch optimierter Hartholzknauf für eine flexible Spatenführung, was für Böden mit schwerem Wurzelwerk vorteilhaft ist. Die Kombination aus Metallstiel und unten entsprechend angesetztem und verschweißtem Spatenblatt mit entsprechender Dicke und spitz zugeschärfter Schneide erleichtert die Arbeit unter schweren Bedingungen und schließt einen Bruch des Stiels und eine Deformation des Spatenblattes während der Arbeit aus.

## Patentansprüche

1. Spaten mit einem Stiel (1), einem Griffstück (5) am oberen Stielende und einem am Stiel (1) befestigten Spatenblatt (3) aus Metall, wobei der Stiel (1) insgesamt aus einem metallischen Rohr (7) gebildet ist,
**dadurch gekennzeichnet, dass**
das Griffstück als kugelförmiger Knauf (5) aus Hartholz ausgebildet ist, und dass das Spatenblatt eine Dicke im Bereich von 4 bis 6 mm aufweist.

2. Spaten nach Anspruch 1,
**dadurch gekennzeichnet, dass**
das Stielrohr (7) aus einem hochlegierten Stahl gebildet ist.

3. Spaten nach Anspruch 2,
**dadurch gekennzeichnet, dass**
der Stahl eine Vickers-Härte größer gleich 700 HV aufweist.

4. Spaten nach Anspruch 3,
**dadurch gekennzeichnet, dass**
der Stahl eine Vickers-Härte größer gleich 900 HV aufweist.

5. Spaten nach einem der vorhergehenden Ansprüche,
**dadurch gekennzeichnet, dass**
der Knauf (5) als Kugel (12) ausgebildet ist.

6. Spaten nach einem der vorhergehenden Ansprüche,
**dadurch gekennzeichnet, dass**
der Knauf am oberen Stirnende des Stiels (1) befestigt ist, wozu der Knauf mit einem bolzenartigen Steckteil (14) versehen ist, der in das obere Rohrende passgerecht einsteckbar ist.

7. Spaten nach einem der vorhergehenden Ansprüche,
**dadurch gekennzeichnet, dass**
das metallische Stielrohr (7) eine Wanddicke im Bereich von 3,2 bis 3,6 Millimeter aufweist.

8. Spaten nach Anspruch 6,
**dadurch gekennzeichnet, dass**
der Steckteil des Knaufs (5) komplementär zum Innenprofil des Stielrohres (7), zylindrisch ausgebildet, und mit dem Stielrohr (7) über eine Schraubverbindung befestigt ist.

9. Spaten nach einem der vorhergehenden Ansprüche,
**dadurch gekennzeichnet, dass**
das Spatenblatt (3) eine Dicke im Bereich von 4,5 bis 5,5 Millimeter aufweist.

10. Spaten nach einem der vorhergehenden Ansprüche,
**dadurch gekennzeichnet, dass**
das Spatenblatt (3) am unteren Ende eine spitz zugeschärfte Schneide (11) aufweist und zwar über einen Bereich von 8 bis 14 mm, insbesondere 9 bis 12 mm, zweckmäßigerweise etwa 1 Zentimeter.

11. Spaten nach einem der vorhergehenden Ansprüche,
**dadurch gekennzeichnet, dass**
das Spatenblatt (3) aus gehärtetem Vergütungsstahl ausgebildet ist.

12. Spaten nach einem der vorhergehenden Ansprüche, bei dem das Spatenblatt (3) mit dem unteren Rohrende des Stiels (1) verschweißt ist,
**dadurch gekennzeichnet, dass**
das untere Rohrende des Stiels (7) flach gestaucht und im Wesentlichen komplementär mit einer am oberen Ende des Spatenblatts (3) vorstehenden Befestigungszunge (9) gestaucht ist, so dass Befestigungszunge und unteres Rohrende konturgerecht für eine Verschweißung zusammenpassen.

13. Spaten nach einem der vorhergehenden Ansprüche,
**dadurch gekennzeichnet, dass**
der Stiel (1) gegenüber dem Spatenblatt unter einem Winkel von etwa 5 bis 10°, vorzugsweise 6 bis 7° nach vorne in Richtung Blattoberseite abgewinkelt ist.

## Claims

1. A spade with a shaft (1), a handle piece (5) at the upper shaft end and a spade blade (3) out of metal that is fixed to the shaft (1), with the shaft (1) overall being formed of a metallic tube (7),
**characterized in that**
the handle piece is confirmed as a ball-shaped knob (5) out of hard wood and that the spade blade has a thickness in the range of 4 to 6 mm.

2. The spade according to claim 1,
**characterized in that**
the shaft tube (7) is made of a high-alloyed steel.

3. The spade according to claim 2,
**characterized in that**
the steel has a Vickers hardness of greater than or equal to 700 HV.

4. The spade according to claim 3,
**characterized in that**
the steel has a Vickers hardness of greater than or equal to 900 HV.

5. The spade according to one of the preceding claims,
**characterized in that**
the knob (5) is configured as a ball (12).

6. The spade according to one of the preceding claims,
**characterized in that**
the knob is fixed at the upper face end of the shaft (1), for which purpose the knob is provided with a bolt-like plug-in part (14) which can be inserted into the upper tube end in a fitted manner.

7. The spade according to one of the preceding claims,
**characterized in that**
the metallic shaft tube (7) has a wall thickness in the range of 3.2 to 3.6 mm.

8. The spade according to claim 6,
**characterized in that**
the plug-in part of the knob (5) is configured cylindrically, complementary to the inner profile of the shaft tube (7), and fixed with the shaft tube (7) via a screw connection.

9. The spade according to one of the preceding claims,
**characterized in that**
the spade blade (3) has a thickness in the range of 4.5 to 5.5 mm.

10. The spade according to one of the preceding claims,
**characterized in that**
the spade blade (3) comprises a pointed, sharpened edge (11) at the lower end, along a range of 8 to 14 mm, in particular 9 to 12 mm, advantageously approx. 1 cm.

11. The spade according to one of the preceding claims,
**characterized in that**
the spade blade (3) is configured of a hardened heat-treatable steel.

12. The spade according to one of the preceding claims, the spade sheet (3) being welded with the lower tube end of the shaft (1),
**characterized in that**
the lower tube end of the shaft (7) is flattened and compressed and essentially complementary to an attachment latch (9) which protrudes at the upper end of the spade blade (3), such, that the attachment latch and the lower tube end fit together in a contour conforming way for a welding.

13. The spade according to one of the preceding claims,
**characterized in that**
the shaft (1), with respect to the shaft blade, is angled at an angle of approx. 5 to 10°, preferably 6 to 7 ° to the front side into the direction of the upper side of the blade.

## Revendications

1. Bêche dotée d'un manche (1), d'une pièce de préhension (5) à l'extrémité supérieure du manche et un fer de bêche (3) en métal fixé au manche, dans laquelle le manche (1) est entièrement formé par un tube métallique (7),
**caractérisée en ce que**
la pièce de préhension est réalisée comme poignée (5) en bois dur en forme de boule, et **en ce que** le fer de bêche possède une épaisseur dans un intervalle de 4 à 6 mm.

2. Bêche selon la revendication 1,
**caractérisée en ce que**
le tube de manche (7) est conçu en acier fortement allié.

3. Bêche selon la revendication 2,
**caractérisée en ce que**
l'acier possède une dureté Vickers supérieure ou égale à 700 HV.

4. Bêche selon la revendication 3,
**caractérisée en ce que**
l'acier possède une dureté Vickers supérieure ou égale à 900 HV.

5. Bêche selon l'une des revendications précédentes,
**caractérisée en ce que**
la poignée (5) est réalisée comme boule (12).

6. Bêche selon l'une des revendications précédentes,
**caractérisée en ce que**
la poignée est fixée à l'extrémité frontale supérieure du manche (1), la poignée étant, à cet effet, doté d'une pièce d'enfichage de type boulon (14), laquelle est exactement enfichable dans l'extrémité supérieure du tube.

7. Bêche selon l'une des revendications précédentes,
**caractérisée en ce que**
le tube de manche métallique (7) possède une épaisseur de paroi dans un intervalle entre 3,2 et 3,6 millimètres.

8. Bêche selon la revendication 6,
**caractérisée en ce que**
la pièce d'enfichage de la poignée (5) est réalisée comme cylindrique et complémentaire au profil interne du tube de manche (7), et est fixée au tube de manche (7) par le biais d'un raccordement à vis.

9. Bêche selon l'une des revendications précédentes,
**caractérisée en ce que**
le fer de bêche (3) possède une épaisseur dans un intervalle entre 4,5 et 5,5 millimètres.

10. Bêche selon l'une des revendications précédentes,
**caractérisée en ce que**
le fer de bêche (3) comporte une arête aiguisée en pointe (11) à l'extrémité inférieure, à savoir sur une zone de 8 à 14 mm, en particulier de 9 à 12 mm, avantageusement environ 1 centimètre.

11. Bêche selon l'une des revendications précédentes,
**caractérisée en ce que**
la poignée (3) est réalisée en acier trempé.

12. Bêche selon l'une des revendications précédentes, dans laquelle le fer de bêche (3) est soudé à l'extrémité de tube inférieure du manche (1),
**caractérisée en ce que**
l'extrémité de tube inférieure du manche (7) est comprimée de manière plate et est comprimée avec une langue de fixation (9) saillant à l'extrémité supérieure du fer de bêche (3) de manière essentiellement complémentaire, de sorte que la langue de fixation et l'extrémité inférieure coïncident avec des contours appropriés pour une soudure.

13. Bêche selon l'une des revendications précédentes,
**caractérisée en ce que**
le manche (1) est coudé par rapport au fer de bêche avec un angle d'environ 5 à 10°, de préférence 6 à 7° vers l'avant dans la direction du côté supérieur du fer.
